# EUROPÄISCHE PATENTSCHRIFT

(11) **EP 3 204 750 B1**
(45) Veröffentlichungstag und Bekanntmachung des Hinweises auf die Patenterteilung: **19.05.2021**
(21) Anmeldenummer: 15757451.8
(22) Anmeldetag: 13.08.2015
(51) Int. Cl.: G01N 15/06, G01N 15/00

(54) **VERFAHREN ZUR FUNKTIONSKONTROLLE EINES SENSORS ZUR DETEKTION VON TEILCHEN, COMPUTERPROGRAMM, ELEKTRONISCHES SPEICHERMEDIUM UND ELEKTRONISCHES STEUERGERÄT**
METHOD FOR CONTROLLING THE FUNCTION OF A SENSOR FOR DETECTING PARTICLES, COMPUTER PROGRAM, ELEKTRONIC STORAGE MEDIUM AND ELECTRONIC CONTROL DEVICE
PROCÉDÉ POUR LE CONTRÔLE DE LA FONCTION D'UN CAPTEUR POUR LA DÉTECTION DE PARTICULES, PROGRAMME INFORMATIQUE, SUPPORT D'ENREGISTREMENT ÉLECTRONIQUE ET APPAREIL DE COMMANDE ÉLECTRONIQUE

(30) Priorität: 08.10.2014 DE 102014220398
(43) Veröffentlichungstag der Anmeldung: 16.08.2017
(73) Patentinhaber: Robert Bosch GmbH, 70442 Stuttgart (DE)
(72) Erfinder: GAERTNER, Benjamin, 76149 Neureut (DE); TIEFENBACH, Andy, 71665 Vaihingen-Horrheim (DE); KLENK, Mathias, 72074 Tübingen (DE)
(86) Internationale Anmeldenummer: PCT/EP2015/068662
(87) Internationale Veröffentlichungsnummer: WO 2016/055200

(56) Entgegenhaltungen:
- EP-A2- 2 492 676
- WO-A2-03/006976
- DE-A1-102007 047 081
- DE-A1-102010 030 634
- DE-A1-102012 210 525
- DE-A1-102013 105 741
- US-A1- 2006 016 687
- US-A1- 2012 006 094

## Beschreibung

### Stand der Technik

Aus dem Stand der Technik sind zahlreiche Verfahren und Vorrichtungen zur Detektion von Teilchen, wie beispielsweise Ruß- oder Staubpartikeln, bekannt. Die Erfindung wird im Folgenden, ohne Beschränkung weiterer Ausführungsformen und Anwendungen, insbesondere unter Bezugnahme auf Sensoren zur Detektion von Teilchen beschrieben, insbesondere von Rußpartikeln in einem Abgasstrom einer Brennkraftmaschine.

Es ist aus der Praxis bekannt, mittels zweier Elektroden, die auf einer Keramik angeordnet sind, eine Konzentration von Teilchen, wie beispielsweise Ruß- oder Staubpartikeln, in einem Abgas zu messen. Dies kann beispielsweise durch eine Messung des elektrischen Widerstands des die beiden Elektroden trennenden keramischen Werkstoffs erfolgen. Derartige Sensoren werden beispielsweise in einem Abgasstrang einer Brennkraftmaschine, wie beispielsweise eines Verbrennungsmotors der Dieselbauart, eingesetzt. Üblicherweise befinden sich diese stromabwärts des Verbrennungsmotors bzw. des Dieselpartikelfilters. Infolge eines steigenden Umweltbewusstseins und auch zum Teil bedingt durch gesetzliche Vorschriften muss zukünftig der Rußausstoß während des Fahrbetriebs eines Kraftfahrzeugs überwacht und die Funktionalität dieser Überwachung sichergestellt werden. Diese Art der Überwachung der Funktionalität wird allgemein als On-Bord-Diagnose bezeichnet. Partikelsensoren werden heute beispielsweise zur Überwachung des Rußausstoßes von Brennkraftmaschinen und zur On-Bord-Diagnose (OBD), beispielsweise zur Funktionsüberwachung von Partikelfiltern, eingesetzt. Dabei sind sammelnde, resistive Partikelsensoren bekannt, die eine Änderung der elektrischen Eigenschaften einer interdigitalen Elektrodenstruktur aufgrund von Partikelanlagerungen auswerten. Derartige Rußsensoren sind beispielsweise aus der DE 101 49 333 A1 oder WO 2003/006976 A2 bekannt.

Bei derartigen resistiven Partikelsensoren für leitfähige Partikel sind zwei oder mehrere metallische Elektroden auf einem elektrisch isolierenden Substrat ausgebildet, wobei die sich unter Einwirkung einer elektrischen Messspannung anlagernden Teilchen, insbesondere Rußpartikel, die kammartig ineinander greifenden Elektroden kurzschließen und zwischen den Sensorelektroden ein abnehmender Widerstand bzw. ein zunehmender Strom bei konstanter angelegter Spannung messbar wird. Zur Regeneration des Sensorelements nach Rußanlagerung wird das Sensorelement mit Hilfe eines integrierten Heizelements in bestimmten Phasen freigebrannt. Die Auswertung des Sensorsignals erfolgt im System durch einen Vergleich von der aus einem Signalverhaltenmodell unter Einbeziehung des Rohemissionsmodells ermittelten Sollauslösezeit und der tatsächlichen Sensorauslösezeit.

Um im Feld die Funktionalität der Elektroden und somit des Sensors zu überwachen, wird an die Elektroden am Ende der Regeneration eine Messspannung angelegt. Dadurch entsteht ein lonenstrom, der zumeist durch Verunreinigungen in Form von Natrium bedingt ist. Überschreitet dieser einen bestimmten Schwellwert, so sind die Elektroden als intakt zu betrachten.

Beim resistiven Partikelsensor des Standes der Technik basiert die Eigendiagnose der Messelektroden auf einer Strommessung bei erhöhten Temperaturen. Durch die Anwesenheit von Natriumionen in der Isolationsschicht unter der Elektrode ist dabei eine gewisse, messbare elektrische Leifähigkeit gegeben. Deshalb wird diese Diagnose während der Sensorregeneration durchgeführt, wo ohnehin eine aktive Beheizung vorgenommen wird und Temperaturen > 750 °C erreicht werden.

Trotz der zahlreichen Vorteile der aus dem Stand der Technik bekannten Verfahren und Vorrichtungen zur Detektion von Teilchen beinhalten diese noch Verbesserungspotential. So ist die oben beschriebene Form der Eigendiagnose nur bedingt alterungsstabil. Die negative Messelektrode liegt nach dem Stand der Technik in dieser Phase auf Masse, die positive Messelektrode bis auf die kurze Diagnosephase ebenfalls, weshalb der positive Heizeranschluss sowie Teile des Heizers im Betrieb immer ein dazu positives, elektrisches Potential aufweisen. Da weiterhin die Regeneration typischerweise über viele Sekunden bis Minuten andauert, erfahren positiv geladene Teilchen wie insbesondere die Natriumionen für diese längere Zeit eine treibende Kraft vom Inneren des Sensors, wo sich der Heizer befindet, hin zur Oberflache, wo die Messelektrode liegt. Durch die hohe Sensortemperatur während dieser Phase weisen die Natriumionen eine große Mobilität auf und wandern nach oben. Diese Mobilität kann als Strom gemessen werden und wird im Folgenden als Heizereinkopplung bezeichnet. Weiterhin erfahren die Natriumionen an der Oberfläche und in oberflächennahen Schichten eine treibende Kraft hin zur negativen Elektrode während der Phasen, in denen ein positives Potential an der positiven Elektrode anliegt und die Sensortemperatur hoch ist. An der Oberfläche kommt es letztlich zu einer Konzentration der Ionen. Die Heizereinkopplung, gemeint ist die Bewegung der Natriumionen vom Heizer zur Oberfläche, verfälscht die Messung des Eigendiagnosestroms, gemeint ist die Bewegung der Natriumionen an der Oberfläche und in oberflächennahen Schichten, und kann dadurch zu einem falschen Diagnoseergebnis führen. Diese Heizereinkopplung ist abhängig vom am Heizer angelegten elektrischen Potential und dem Anteil an leitfähigen Ionen zu Elektronen.

Aus der 10 2010 030 634 A1 ist ein Verfahren zum Betreiben eines Partikelsensors bekannt.

### Offenbarung der Erfindung

Es wird daher ein Verfahren zur Funktionskontrolle eines Sensors zur Detektion von Teilchen, insbesondere von Ruß, vorgeschlagen, welches die Nachteile bekannter Verfahren zumindest weitgehend vermeidet und bei dem die Genauigkeit der Eigendiagnose durch Kompensation der Heizereinkopplung erhöht wird.

Das erfindungsgemäße Verfahren nach Anspruch 1 zur Funktionskontrolle eines Sensors zur Detektion von Teilchen, insbesondere von Ruß, wobei der Sensor mindestens zwei Messelektroden und ein Substrat aufweist, auf dem die Messelektroden angeordnet sind, und weiterhin ein Heizelement aufweist, umfasst die folgenden Schritte, bevorzugt in der angegebenen Reihenfolge:
- Durchführen einer ersten Strom-Spannungsmessung zum Ermitteln einer ersten Messgröße,
- Durchführen einer zweiten Strom-Spannungsmessung zum Ermitteln einer zweiten Messgröße, wobei eine Messelektrode der Messelektroden auf ein anderes elektrisches Potential gelegt wird,
- Durchführen einer dritten Strom-Spannungsmessung zum Ermitteln einer dritten Messgröße und
- Bilden eines Korrekturwerts zum Korrigieren der zweiten Messgröße mittels der ersten Messgröße und der dritten Messgröße.

Im Rahmen der vorliegenden Erfindung wird der Ausdruck "eine Messelektrode der Messelektroden wird auf ein anderes elektrisches Potential gelegt" verwendet, um zum Ausdruck zu bringen, dass sich das elektrische Potential einer der Messelektroden von dem elektrischen Potential der anderen bzw. übrigen Messelektroden unterscheidet.

Die erste Strom-Spannungsmessung wird erfindungsgemäß vor der zweiten Strom-Spannungsmessung durchgeführt und die dritte Strom-Spannungsmessung wird erfindungsgemäß nach der zweiten Strom-Spannungsmessung durchgeführt. Die erste Strom-Spannungsmessung und die dritte Strom-Spannungsmessung werden erfindungsgemäß durchgeführt, ohne dass ein elektrisches Potential an die Messelektroden angelegt wird. Der Korrekturwert wird erfindungsgemäß basierend auf einem Abklingverhalten der ersten Messgröße und der dritten Messgröße ermittelt. Der Korrekturwert zum Korrigieren wird erfindungsgemäß von der zweiten Messgröße subtrahiert werden. Die erste Messgröße, die zweite Messgröße und die dritte Messgröße sind erfindungsgemäß ein elektrischer Strom zwischen den Messelektroden. Das Verfahren wird erfindungsgemäß durchgeführt, wenn das Heizelement betrieben wird. Das Heizelement kann durch Anlegen einer dauerhaften oder periodisch getakteten elektrischen Spannung betrieben werden. Beim Betrieb mit einer getakteten elektrischen Spannung ist darauf zu achten, dass der Zeitversatz zwischen Ein- bzw. Ausschaltflanke und Signalmessung gleichbleibend ist. Mit anderen Worten muss bei einem Betrieb mit einer getakteten elektrischen Spannung der zeitliche Abstand zwischen Einschalten oder Ausschalten des Heizelements und den jeweiligen Messungen des Signals immer gleich groß sein. Die an das Heizelement angelegte Spannung wird im Wesentlichen aus der im Fahrzeug verfügbaren Bordnetzspannung abgeleitet oder zusätzlich von einem höheren Spannungsniveau heruntergesetzt auf typischerweise 12 V bis 14 V. Das während der Durchführung der zweiten Strom-Spannungsmessung an die eine Messelektrode angelegte elektrische Potential kann im Wesentlichen z.B. 8,4 V sein, beispielsweise mit einer Abweichung von nicht mehr als 0,5 V.

Des Weiteren wird ein Computerprogramm gemäß Anspruch 3 vorgeschlagen, welches Befehle umfasst, die bewirken, dass ein Steuergerät, das mit dem in Anspruch 1 genannten Sensor verbunden ist, das Verfahren nach Anspruch 1 oder 2 durchführt.

Des Weiteren wird in Anspruch 4 ein elektronisches Speichermedium vorgeschlagen, auf welchem ein Computerprogramm gemäß Anspruch 3 gespeichert ist.

Des Weiteren in Anspruch 5 ein elektronisches Steuergerät vorgeschlagen, welches ein elektronisches Speichermedium nach Anspruch 4 umfasst.

Unter Teilchen im Sinne der vorliegenden Erfindung sind insbesondere elektrisch leitfähige Teilchen zu verstehen, wie beispielsweise Ruß oder Staub.

Unter Messelektroden sind im Rahmen der vorliegenden Erfindung Elektroden zu verstehen, die geeignet sind zur Messung eines Stroms und/oder einer elektrischen Spannung. Die Messelektroden können insbesondere als Interdigitalelektroden ausgebildet sein, also als ineinander eingreifende Messelektroden, beispielsweise zwei oder mehr ineinander eingreifende Kammstrukturen.

Unter einem elektrisch isolierenden Werkstoff ist im Rahmen der vorliegenden Erfindung jeder Werkstoff zu verstehen, der geeignet ist, einen Stromfluss zu verhindern, wie beispielsweise eine Keramik.

Unter einer Strom-Spannungsmessung ist im Rahmen der vorliegenden Erfindung eine Messung eines elektrischen Stroms und/oder einer elektrischen Spannung zu verstehen. Die Messung erfolgt dabei zwischen den Messelektroden. Zusätzlich kann an die Messelektroden eine bestimmte elektrische Spannung angelegt werden und ein Stromfluss zwischen den Messelektroden gemessen werden oder an die Messelektroden ein elektrischer Strom angelegt werden und eine Spannung zwischen den Messelektroden gemessen werden. Eine Strom-Spannungsmessung kann insbesondere eine Widerstandsmessung sein, wobei ein Widerstand des durch die Messelektroden und das Substrat gebildeten Aufbaus gemessen werden kann. Es kann beispielsweise eine spannungsgesteuerte oder spannungsgeregelte Messung und/oder eine stromgesteuerte und/oder stromgeregelte Messung erfolgen. Das Anlegen des Stroms und/oder der elektrischen Spannung kann in Form eines kontinuierlichen Signals und/oder auch in Form eines gepulsten Signals erfolgen. So kann beispielsweise eine Gleichspannung und/oder ein Gleichstrom angelegt werden und eine Stromantwort bzw. eine Spannungsantwort erfasst werden. Alternativ kann eine gepulste Spannung und/oder ein gepulster Strom angelegt werden und eine Stromantwort bzw. eine Spannungsantwort erfasst werden.

Im Rahmen der vorliegenden Erfindung ist unter einer Messgröße eine durch die Strom-Spannungsmessung ermittelte Größe zu verstehen, die entsprechend ein elektrischer Strom oder eine elektrische Spannung sein kann. Auch ein daraus hergeleiteter elektrischer Widerstand kann als Messgröße verwendet werden.

Unter dem Durchführen einer Strom-Spannungsmessung vor oder nach einem bestimmten Zeitpunkt ist im Rahmen der vorliegenden Erfindung ein Durchführen der Strom-Spannungsmessung derart zu verstehen, dass die Strom-Spannungsmessung im Wesentlichen zeitnah zu dem Zeitpunkt durchgeführt wird, d. h. mit einem zeitlichen Versatz von beispielsweise maximal einer Sekunde.

Unter einem elektronischen Steuergerät ist im Rahmen der vorliegenden Erfindung der vorliegenden Erfindung jedes Gerät zu verstehen, das geeignet ist, das erfindungsgemäße Verfahren durchzuführen und dabei die entsprechenden Steuerungs- und/oder Regelungsvorgänge durchzuführen. Das Steuergerät kann ein dem Sensor zugeordnete eigenes Steuergerät oder auch Teil eines Steuergeräts einer Brennkraftmaschine sein, wie beispielsweise Teil einer Motorsteuerung eines Verbrennungsmotors, insbesondere eines Dieselmotors.

Ein Grundgedanke der vorliegenden Erfindung ist, die Heizereinkopplung vor und nach dem eigentlichen Messpuls in der Diagnosephase zu messen und mit Hilfe eines mathematischen Modells aus den Messwerten einen Fehlerbeitrag zum Zeitpunkt des Messpulses zu berechnen und vom eigentlichen Messwert abzuziehen. Dies kann in dem Steuergerät des Sensors oder durch eine Erweiterung der Eigendiagnosemessung realisiert sein. So wird beispielsweise zunächst die Heizereinkopplung vor dem Messpuls der Diagnosephase gemessen. Anschließend wird der Messwert beim Anlegen des Messpulses der Diagnosephase gemessen, also die Heizereinkopplung und der Eigendiagnosestrom. Anschließend wird die Heizereinkopplung nach dem Messpuls der Diagnosephase gemessen. Daraufhin wird ein Korrekturwert basierend auf dem Abklingverhalten der Heizereinkopplung vor und nach dem Messpuls berechnet. Beispielsweise wird der Korrekturwert vom Messwert beim Anlegen des Messpulses der Diagnosephase subtrahiert.

Die Umsetzung des erfindungsgemäßen Verfahrens kann über eine Software erfolgen. Beispielsweise kann die Durchführung in Form eines Computerprogramms erfolgen, das auf einem elektronischen Speichermedium gespeichert sein kann.

Die Kationen, wie beispielsweise Natriumionen, die prinzipbedingt aus der Tiefe des Sensorelements während der Eigendiagnose zur negativen Messelektrode getrieben werden, verfälschen das Ergebnis der Eigendiagnose durch die Erfindung nicht mehr. Es wird nur der Strom diagnostiziert, der durch den Messpuls erzeugt wird. Ein Ändern der Heizereinkopplung über die Lebensdauer des Sensors hat keinen Einfluss auf das Diagnoseergebnis.

Bei abgetrennter positiver Messelektrode wandern mehr Kationen, wie beispielsweise Natriumionen, zur negativen Messelektrode und erhöhen die Heizereinkopplung auf die negative Messelektrode. Die Erfindung kompensiert diese erhöhte Heizereinkopplung und liefert in diesem Fall das korrekte Diagnoseergebnis: Sensordefekt

Es ist weiterhin keine Hardwareänderung an dem Sensor oder an dem zugehörigen Steuergerät erforderlich. Die Änderung der Messabfolge und die Korrekturwertberechnungen sind durch eine Software realisierbar.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine Explosionsdarstellung eines Sensors zur Detektion von Teilchen,
- Figur 2: ein Blockschaltbild des Sensors inklusive des zugehörigen Steuergeräts mit möglichen Messelektroden- und Heizelementpotentialen während der Regeneration und
- Figur 3: einen exemplarischen zeitlichen Verlauf der Elektroden- und Heizelementpotentiale während der Regenerationsphase und bis zum Beginn der Messphase

### Ausführungsformen der Erfindung

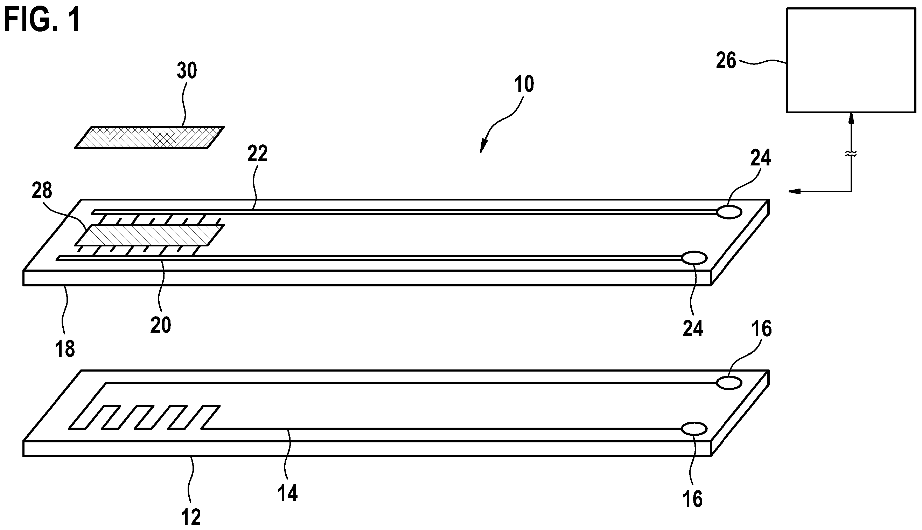

Figur 1 zeigt einen Sensor 10 zur Detektion von Teilchen, insbesondere von Ruß, in einem Gasstrom, wie beispielsweise einem Abgasstrom einer Brennkraftmaschine, der zum Einbau in einen Abgasstrang eines Kraftfahrzeugs dient. Beispielsweise ist der Sensor 10 als Rußsensor ausgebildet und bevorzugt stromabwärts eines Rußfilters eines Kraftfahrzeugs mit einem Dieselverbrennungsmotor angeordnet.

Der Sensor 10 weist eine Trägerschicht 12 auf, die zumindest teilweise aus einem elektrisch isolierenden Werkstoff hergestellt sein kann, wie beispielsweise aus einer Keramik, wie Aluminiumoxid. In die Trägerschicht 12 ist ein Heizelement 14 integriert, das über Kontaktierungen 16 mit einer geeigneten Spannungsquelle (nicht näher gezeigt) verbindbar ist und zum Freibrennen des Sensors 10 von gegebenenfalls abgelagerten Teilchen, wie Rußpartikeln, dient.

Auf der Trägerschicht 12 ist ein plattenförmiges Substrat 18 angeordnet, das zumindest teilweise aus einem elektrisch isolierenden Werkstoff hergestellt sein kann, wie beispielsweise einer Keramik, wie Aluminiumoxid. Auf dem Substrat 18 ist eine Struktur aus zwei Messelektroden 20, 22 angeordnet. Beispielsweise sind die Messelektroden 20, 22 als Interdigitalelektroden ausgebildet, so dass sie wie gezeigt kammförmig ineinandergreifen. Die Messelektroden 20, 22 sind über Kontaktierungen 24 mit einem elektronischen Steuergerät 26 verbindbar.

In dem Bereich, in dem die Messelektroden 20, 22 kammförmig ineinandergreifen, können die Messelektroden 20, 22 zumindest teilweise von einem Dielektrikum 28 überdeckt sein, so dass die Messelektroden 20, 22 als Elektroden eines Kondensators mit messbarer Kapazität dienen können. Das Dielektrikum 28 kann wiederum mit einer Schutzschicht 30 versehen sein, so dass es gegenüber dem umgebenden Medium abgetrennt ist, wodurch eine Degeneration des Dielektrikums 28 ausgeschlossen ist.

Der Sensor 10 kann ferner ein Gehäuse umfassen, das den in Figur 1 dargestellten Aufbau umgibt und aus Gründen der Vereinfachung der Erläuterung des Aufbaus des Sensors 10 in Figur 1 nicht gezeigt ist. Beispielsweise kann das Gehäuse als Fanghülse ausgebildet sein, die in einem oberhalb der Messelektroden 20, 22 liegenden Bereich mit einer Öffnung versehen ist und zur Beruhigung eines in dem Abgasstrang strömenden Gasstroms dient, so dass sich Rußpartikel bzw. sonstige in dem Gasstrom enthaltene Teilchen bevorzugt im Bereich der Messelektroden 20, 22 ablagern. Der Sensor 10 nach der Figur 1 kann wie folgt arbeiten. Wenn sich auf dem Substrat 18 Ruß bzw. sonstige elektrisch leitenden Teilchen ablagern, so reduziert sich ein elektrischer Widerstand zwischen den beiden Messelektroden 20, 22. Durch Messung der Impedanz zwischen den beiden Messelektroden 20, 22 ergibt sich ein für ein so genanntes RC-Glied typisches Verhalten. Dies bedeutet, dass die Ruß- bzw. Teilchenkonzentration in dem betreffenden Abgas anhand der zeitlichen Änderung des Widerstandsanteils des RC-Gliedes bestimmt werden kann.

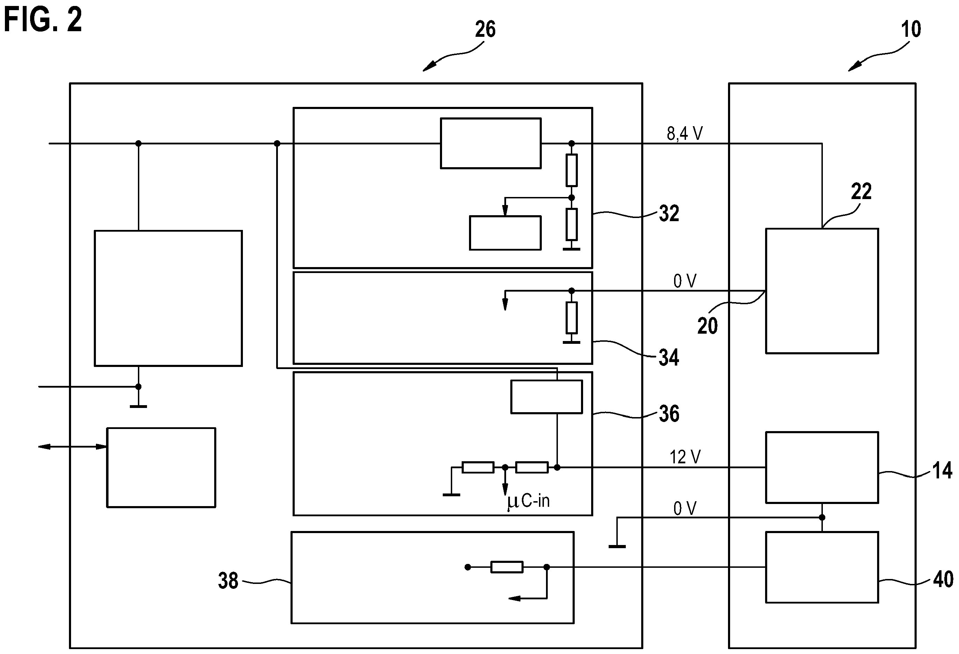

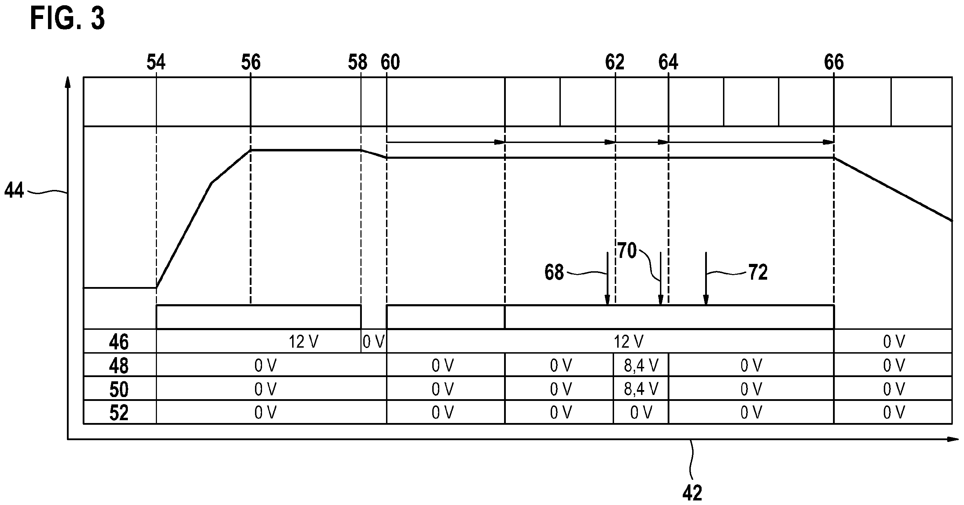

Zur Regeneration des Sensors 10 werden die angelagerten Teilchen nach gewisser Zeit mittels des in die Trägerschicht 12 integrierten Heizelements 14 abgebrannt. Bei funktionstüchtigem Sensor 10 sollte nach diesem so genannten Ausheizen der Widerstand zwischen den Messelektroden 20 deutlich ansteigen und bevorzugt gegen unendlich gehen. Da die Arbeitsweise des Sensors 10 zur Detektion der Teilchenkonzentration an sich bekannt ist, beispielsweise aus dem oben genannten Stand der Technik der WO 2003/006976 A2, wird an dieser Stelle nicht näher auf die gewöhnliche Arbeitsweise des Sensors 10 eingegangen.Stattdessen wird nun das erfindungsgemäße Verfahren zur Funktionskontrolle des Sensors 10 beschrieben. Das Verfahren kann beispielsweise von dem oben genannten Steuergerät 26 durchgeführt werden. Insbesondere wird das Verfahren anhand der Figuren 2 und 3 beschrieben.

Figur 2 zeigt ein Blockschaltbild des Sensors 10 und der Ansteuerung durch das Steuergerät 26 mit möglichen Elektroden- und Heizelementpotentialen während der Regeneration. Dabei ist im linken Teil das Steuergerät 26 dargestellt, das eine Schaltung 32 einer elektrischen Spannungsquelle und eine Auswerteeinheit 34 umfasst. Des Weiteren weist das Steuergerät 26 eine Schaltung 36 für das Heizelement 14 und eine Auswerteeinheit 38 für einen Temperaturmessfühler 40 des Sensors 10 auf. Der Temperaturmessfühler 40 kann dabei Teil des Heizelements 14 sein, so dass die Auswerteeinheit 38 die Temperatur anhand einer Änderung des elektrischen Widerstands des Heizelements 14 bestimmen kann. Aus der Darstellung der Figur 2 ist zu erkennen, dass während der Regeneration das Heizelement 14 betrieben wird, indem eine elektrische Spannung von beispielsweise 12 V an das Heizelement 14 angelegt wird. Des Weiteren ist aus Figur 2 zu erkennen, dass die negative Messelektrode 20 auf Masse liegt und während der Regeneration an der positiven Messelektrode 22 ein elektrisches Potential von beispielsweise 8,4 V angelegt wird.

Figur 3 zeigt einen exemplarischen zeitlichen Verlauf von Elektroden und Heizelementpotentialen während der Regenerationsphase und bis zum Beginn einer Messphase, wie nachstehend näher beschrieben wird. Auf der X-Achse 42 ist die Zeit aufgetragen und auf der Y-Achse 44 ist die Temperatur aufgetragen. Unterhalb der X-Achse 42 befinden sich in den Zeilen von oben nach unten eine elektrische Spannung 46 des Heizelements 14 und eine elektrische Spannung 48 der Messelektroden 20, 22, ein elektrisches Potential 50 der positiven Messelektrode 22 und ein elektrisches Potential 52 der negativen Messelektrode 20. Zu einem Zeitpunkt 54 wird das Heizelement 14 betrieben. Das Betreiben des Heizelements 14 erfolgt durch Anlegen einer elektrischen Spannung von beispielsweise 12 V an das Heizelement 14. Dadurch heizt das Heizelement 14 den Sensor 10 auf.

Ab einem Zeitpunkt 56 erfolgt ein Abbrennen der an dem Sensor 10 angelagerten Teilchen, wie beispielsweise Ruß. Das Abbrennen erfolgt über einen Zeitraum von beispielsweise mehr als 30 Sekunden. Zum Ende des Rußabbrennens wird zu einem Zeitpunkt 58 bis zu einem Zeitpunkt 60 kurzzeitig das Heizelement 14 nicht betrieben, indem keine elektrische Spannung an dieses angelegt wird, um eine definierte Temperatur zu erreichen. Ab dem Zeitpunkt 60 wird das Heizelement 14 wieder betrieben, indem eine elektrische Spannung von beispielsweise 12 V angelegt wird. Bis zu einem Zeitpunkt 62 wird dabei keine elektrische Spannung an die Messelektroden 20, 22 angelegt. Zum Zeitpunkt 62 wird an die positive Messelektrode 22 ein elektrisches Potential von 8,4 V angelegt. Dies ist bis zu einem Zeitpunkt 64 die eigentliche Messphase wie nachstehend ausführlicher beschrieben wird. Zum Zeitpunkt 64 wird dann kein elektrisches Potential mehr an die Messelektrode 22 angelegt, das Heizelement 14 jedoch weiterhin bis zu einem Zeitpunkt 66 betrieben. Nachstehend wird nun das erfindungsgemäße Verfahren ausführlich beschrieben.

Kurz vor dem Zeitpunkt 62 wird eine erste Stromspannungsmessung zum Ermitteln einer ersten Messgröße durchgeführt. Beispielsweise wird wie in Figur 3 dargestellt, kurz vor dem Zeitpunkt 62, d. h. zu einem Zeitpunkt 68, ein elektrischer Strom zwischen den Messelektroden 20, 22 gemessen, ohne dass an die Messelektroden 20, 22 eine elektrische Spannung angelegt ist. Zu einem Zeitpunkt 70 zwischen den Zeitpunkten 62 und 64, beispielsweise kurz vor dem Zeitpunkt 64, wird eine zweite Strom-Spannungsmessung zum Ermitteln einer zweiten Messgröße durchgeführt. Dabei ist in dem Zeitraum zwischen den Zeitpunkten 62 und 64 an die positive Messelektrode 22 das elektrische Potential von 8,4 V und somit auch zum Zeitpunkt 70 angelegt und es wird der elektrische Strom zwischen den Messelektroden 20, 22 erfasst. Nach dem Zeitpunkt 64, beispielsweise zum Zeitpunkt 72 wird eine dritte Strom-Spannungsmessung zum Ermitteln einer dritten Messgröße durchgeführt. Zu diesem Zeitpunkt ist an die positive Messelektrode 22 kein elektrisches Potential angelegt.

Mittels der ersten Messgröße und der dritten Messgröße wird ein Korrekturwert zum Korrigieren der zweiten Messgröße gebildet. Insbesondere wird der Korrekturwert basierend auf einem Abklingverhalten der ersten Messgröße und der dritten Messgröße ermittelt. So schwankt der zwischen den Messelektroden 20, 22 gemessene elektrische Strom bis zum Zeitpunkt 68 aufgrund des aufgeheizten Sensorelements und der oben beschriebenen Heizereinkopplung.

Zum Zeitpunkt 68 hat sich jedoch die erste Messgröße stabilisiert und ist somit auf einen gewissen Wert abgeklungen. Analog wird das Abklingverhalten der dritten Messgröße ermittelt. So kommt es, auch wenn kein elektrisches Potential mehr an die Messelektrode 22 angelegt ist, noch zu einer Polarisation und somit zu einem Schwanken des elektrischen Stroms. Dieser klingt jedoch nach einer gewissen Zeit ab, so dass zum Zeitpunkt 70 die dritte Messgröße ermittelt werden kann. Der so ermittelte Korrekturwert zum Korrigieren kann dann von der zweiten Messgröße subtrahiert werden.

Mit anderen Worten wird der Betrieb des Sensors 10 durch das Steuergerät 26 gesteuert. Bei einer Anwendung in einem Kraftfahrzeug, wie beispielsweise einem Personenkraftwagen, ergeben sich die elektrischen Potentiale an den Messelektroden 20, 22 und dem Heizelement 14 während der Regeneration bis zum Beginn der eigentlichen Rußsammelphase, wie in Figur 2 dargestellt ist. Es wird deutlich, dass das positive Potential des Heizelements 14 bis auf ganz kurze Phasen immer höher ist als die beiden Potentiale der Messelektroden 20, 22. Die Potentialverhältnisse während der Regeneration sind im Detail in Figur 3 dargestellt sowie auch die Lage der drei Messzeitpunkte zur Kompensation der Heizereinkopplung. Entsprechend dem oben beschriebenen Verfahren verfälschen Kationen, wie beispielsweise Natriumionen, die prinzipbedingt aus der Tiefe des Sensors 10 während der Eigendiagnose zur negativen Messelektrode 20 getrieben werden, das Ergebnis der Eigendiagnose nicht. Es wird nur der elektrische Strom diagnostiziert, der durch den Messpuls erzeugt wird. Auch das Ändern der Heizereinkopplung über die Lebensdauer hat somit keinen Einfluss auf das Diagnoseergebnis mehr.

## Patentansprüche

1. Verfahren zur Funktionskontrolle eines Sensors (10) zur Detektion von Teilchen, insbesondere von Ruß, wobei der Sensor (10) mindestens zwei Messelektroden (20, 22) und ein Substrat (18) aufweist, auf dem die Messelektroden (20, 22) angeordnet sind, und weiterhin ein Heizelement (14) aufweist, wobei das Verfahren die folgenden
Schritte umfasst:
- Durchführen einer ersten Strom-Spannungsmessung zum Ermitteln einer ersten Messgröße,
- Durchführen einer zweiten Strom-Spannungsmessung zum Ermitteln einer zweiten Messgröße, wobei eine Messelektrode (22) der Messelektroden (20, 22) auf ein anderes elektrisches Potential (50) gelegt wird,
- Durchführen einer dritten Strom-Spannungsmessung zum Ermitteln einer dritten Messgröße und
- Bilden eines Korrekturwerts zum Korrigieren der zweiten Messgröße mittels der ersten Messgröße und der dritten Messgröße,
wobei die erste Strom-Spannungsmessung vor der zweiten Strom-Spannungsmessung durchgeführt wird und die dritte Strom-Spannungsmessung nach der zweiten Strom-Spannungsmessung durchgeführt wird, **dadurch gekennzeichnet, dass** die erste Strom-Spannungsmessung und die dritte Strom-Spannungsmessung durchgeführt werden, ohne dass an eine Messelektrode (22) der Messelektroden (20, 22) ein elektrisches Potential angelegt wird, wobei der Korrekturwert basierend auf einem Abklingverhalten der ersten Messgröße und der dritten Messgröße ermittelt wird, wobei der Korrekturwert zum Korrigieren von der zweiten Messgröße subtrahiert wird, wobei die erste Messgröße, die zweite Messgröße und die dritte Messgröße ein elektrischer Strom zwischen den Messelektroden (20, 22) sind, wobei das Verfahren durchgeführt wird, wenn das Heizelement (14) betrieben wird, wobei das Heizelement (14) durch Anlegen einer elektrischen Spannung betrieben wird.

2. Verfahren nach dem vorhergehenden Anspruch, wobei die an das Heizelement (14) angelegte Spannung 12 V ist, wobei während der Durchführung der zweiten Strom-Spannungsmessung an die negative Messelektrode (20) auf Masse liegt und an der positiven Messelektrode (22) ein elektrisches Potential von beispielsweise 8,4 V angelegt wird.

3. Computerprogramm, umfassend Befehle, die bewirken, dass ein Steuergerät (26), das mit einem Sensors (10) zur Detektion von Teilchen, der mindestens zwei Messelektroden (20, 22) und ein Substrat (18) aufweist, auf dem die Messelektroden (20, 22) angeordnet sind, und weiterhin ein Heizelement (14) aufweist, verbunden ist, ein Verfahren zur Funktionskontrolle des Sensors (10) nach Anspruch 1 oder 2 durchführt.

4. Elektronisches Speichermedium, auf welchem ein Computerprogramm nach Anspruch 3 gespeichert ist.

5. Elektronisches Steuergerät (26), welches ein elektronisches Speichermedium nach Anspruch 4 umfasst.

## Claims

1. Method for checking the function of a sensor (10) for detecting particles, in particular soot, wherein the sensor (10) has at least two measurement electrodes (20, 22) and a substrate (18), on which the measurement electrodes (20, 22) are arranged, and also has a heating element (14), wherein the method comprises the following steps of:
- carrying out a first current/voltage measurement for determining a first measurement variable,
- carrying out a second current/voltage measurement for determining a second measurement variable, wherein one measurement electrode (22) of the measurement electrodes (20, 22) is connected to a different electrical potential (50),
- carrying out a third current/voltage measurement for determining a third measurement variable, and
- forming a correction value for correcting the second measurement variable by means of the first measurement variable and the third measurement variable,
wherein the first current/voltage measurement is carried out before the second current/voltage measurement and the third current/voltage measurement is carried out after the second current/voltage measurement,
**characterized in that**
the first current/voltage measurement and the third current/voltage measurement are carried out without an electrical potential being applied to one measurement electrode (22) of the measurement electrodes (20, 22), wherein the correction value is determined on the basis of a decay behaviour of the first measurement variable and of the third measurement variable, wherein the correction value is subtracted from the second measurement variable for the purpose of correction, wherein the first measurement variable, the second measurement variable and the third measurement variable are an electrical current between the measurement electrodes (20, 22),
wherein the method is carried out when the heating element (14) is operated, wherein the heating element (14) is operated by applying an electrical voltage.

2. Method according to the preceding claim, wherein the voltage applied to the heating element (14) is 12 V, wherein the negative measurement electrode (20) is connected to earth and an electrical potential of 8.4 V, for example, is applied to the positive measurement electrode (22) while carrying out the second current/voltage measurement.

3. Computer program comprising instructions which cause a control device (26), which is connected to a sensor (10) for detecting particles which has at least two measurement electrodes (20, 22) and a substrate (18), on which the measurement electrodes (20, 22) are arranged, and also has a heating element (14), to carry out a method for checking the function of the sensor (10) according to Claim 1 or 2.

4. Electronic storage medium, on which a computer program according to Claim 3 is stored.

5. Electronic control device (26) which comprises an electronic storage medium according to Claim 4.

## Revendications

1. Procédé de commande fonctionnel d'un capteur (10) destiné à la détection de particules, en particulier de suie, le capteur (10) comportant au moins deux électrodes de mesure (20, 22) et un substrat (18), sur lequel sont disposées les électrodes de mesure (20, 22), et en outre un élément chauffant (14), le procédé comprenant les étapes suivantes :
- effectuer une première mesure courant-tension destinée à déterminer une première grandeur mesurée,
- effectuer une deuxième mesure courant-tension pour déterminer une deuxième grandeur mesurée, une électrode de mesure (22) des électrodes de mesure (20, 22) étant mise à un autre potentiel électrique (50),
- effectuer une troisième mesure courant-tension pour déterminer une troisième grandeur de mesure et
- former une valeur de correction pour corriger la deuxième grandeur de mesure au moyen de la première grandeur de mesure et de la troisième grandeur de mesure,
la première mesure courant-tension étant effectuée avant la deuxième mesure courant-tension et la troisième mesure courant-tension étant effectuée après la deuxième mesure courant-tension,
**caractérisé en ce que**
la première mesure courant-tension et la troisième mesure courant-tension sont effectuées sans qu'un potentiel électrique ne soit appliqué à une électrode de mesure (22) des électrodes de mesure (20, 22), la valeur de correction étant déterminée sur la base d'un comportement de décroissance de la première grandeur de mesure et dela troisième grandeur de mesure et la valeur de correction étant soustraite de la deuxième grandeur de mesure pour effectuer la correction, la première grandeur de mesure, la deuxième grandeur de mesure et la troisième grandeur de mesure étant un courant électrique entre les électrodes de mesure (20, 22),
le procédé étant mis en œuvre lorsque l'élément chauffant (14) est mis en fonctionnement, l'élément chauffant (14) étant mis en fonctionnement par application d'une tension électrique.

2. Procédé selon la revendication précédente, la tension appliquée à l'élément chauffant (14) étant de 12 V, l'électrode de mesure négative (20) étant mise à la masse pendant la deuxième mesure courant-tension et la l'électrode de mesure positive (22) étant mise à un potentiel électrique de par exemple 8,4 V.

3. Logiciel, comprenant des instructions qui ordonnent à un dispositif de commande (26), qui est relié à un capteur (10) de détection de particules, qui comporte au moins deux électrodes de mesure (20, 22) et un substrat (18), sur lequel sont disposées les électrodes de mesure (20, 22), et en outre un élément chauffant (14), de mettre en œuvre un procédé de commande fonctionnelle du capteur (10) selon la revendication 1 ou 2.

4. Support de stockage électronique sur lequel est stocké un logiciel selon la revendication 3.

5. Dispositif de commande électronique (26), qui comprend un support de stockage électronique selon la revendication 4.
